# EUROPEAN PATENT APPLICATION

(11) **EP 3 633 982 A1**
(43) Date of publication of application: **08.04.2020**
(21) Application number: 18805746.7
(22) Date of filing: 10.05.2018
(51) Int. Cl.: H04N 7/15, G06T 13/40

(54) **VIDEO CONFERENCE REALIZATION METHOD, DEVICE AND SYSTEM, AND COMPUTER STORAGE MEDIUM**

(30) Priority: 24.05.2017 CN 201710374212
(71) Applicant: ZTE Corporation, Shenzhen, Guangdong 518057 (CN)
(72) Inventor: ZHU, Guili, Shenzhen, Guangdong 518057 (CN); WANG, Yanru, Shenzhen, Guangdong 518057 (CN); ZHANG, Zuoqun, Shenzhen, Guangdong 518057 (CN); GUO, Qiong, Shenzhen, Guangdong 518057 (CN); LI, Lishi, Shenzhen, Guangdong 518057 (CN)
(74) Representative: Herzog IP Patentanwalts GmbH
(86) International application number: PCT/CN2018/086360
(87) International publication number: WO 2018/214746

(57) **Abstract**

Disclosed are a video conference realization method, device and system, and a computer storage medium. The method includes: acquiring a conference hall video collected by each user who attends a conference in each conference hall and a portrait video of each user who attends the conference in each conference hall; synthesizing, according to a pre-set synthesis scheme, the portrait video of each user who attends the conference in each conference hall and a conference hall video collected by a pre-set user who attends the conference so as to form a virtual video to be displayed; and sending virtual videos respectively to a displaying means of each user who attends the conference.

## Description

### Field of the Invention

The present disclosure relates to the video conference technology, and in particular, to a video conference realization method, a video conference realization device, a video conference realization system, and a computer storage medium.

### Background of the Invention

With the advancement of technology and the continuous development of science and technology, a new technology that seamlessly integrates real world information and virtual world information has emerged, and is called Augmented Reality (AR) technology. The so-called AR technology is a technology that calculates the position and angle of a video camera image in real time and adds corresponding images, videos, and 3D models to the video camera image. The AR technology not only displays the real world information, but also displays the virtual information at the same time. The two kinds of information complement with each other and super impose on each other. The goal of this technology is to add the virtual world to the real world for interaction. Nowadays, the AR technology attracts attention of more and more people, and it is gradually applied in some fields.

Since the video conference system has been widely used, more and more video conference users hope that other participants "come" to their real environment for face-to-face communication, rather than seeing each other through the television screen. Therefore, there is a need to apply the AR technology to the video conference system. The method of using the AR technology in the video conference system includes: acquiring a three-dimensional image of a first conference hall; and displaying the acquired three-dimensional image to a user in a second conference hall by using the AR technology. The video conference system based on the AR technology has its limitation. That is, this realization method can only support mutual displaying of simple three-dimensional scenes between two conference halls, and the video conference system cannot be used among several conference halls. Therefore, if there are several conference halls, it cannot be realized that a participant joins a conference with all the participants through the video conference system.

### Summary of the Invention

The following is a summary of the subject matter described in detail herein. The summary is not for limiting the protection scope of the claims.

Embodiments of the present disclosure provide a video conference realization method, a video conference realization device, a video conference realization system, and a computer storage medium, which can realize a video conference based on AR technology involving multiple conference halls.

Embodiments of the present disclosure provide a video conference realization method, including:
acquiring a conference hall video collected by each user who attends a conference in each conference hall and a portrait video of each user who attends the conference in each conference hall;
synthesizing, according to a pre-set synthesis scheme, the portrait video of each user who attends the conference in each conference hall and a conference hall video collected by a pre-set user who attends the conference so as to form a virtual video to be displayed; and
sending virtual videos respectively to a displaying means of each user who attends the conference.

In an exemplary embodiment, acquiring the conference hall video collected by each user who attends the conference in each conference hall and the portrait video of the user who attends the conference includes:
acquiring a video of the conference hall within a viewing scope of each user who attends the conference in each conference hall in real time and acquiring a video of a full-face portrait of each user who attends the conference in real time through a conference hall control terminal in each conference hall.

In an exemplary embodiment, acquiring the video of the conference hall within the viewing scope of each user who attends the conference in each conference hall in real time includes:
acquiring the video of the conference hall within the viewing scope of the user who attends the conference shot by a first shooting means worn by each user who attends the conference in each conference hall in real time; and
acquiring the video of the full-face portrait of each user who attends the conference in real time includes:
   acquiring the video of the full-face portrait of each user who attends the conference shot by a second shooting means in each conference hall in real time.

In an exemplary embodiment,, before synthesizing the portrait video of each user who attends the conference in each conference hall and the conference hall video collected by the pre-set user who attends the conference, the method further includes:
performing a processing of non-destructively removing an image of the second shooting means from the conference hall video collected by each user who attends the conference in each conference hall; or
performing a processing of non-destructively removing images of the first shooting means and the displaying means from the portrait video of each user who attends the conference in each conference hall.

In an exemplary embodiment, synthesizing, according to the pre-set synthesis scheme, the portrait video of each user who attends the conference in each conference hall and the conference hall video collected by the pre-set user who attends the conference so as to form the virtual video to be displayed includes:
determining a current user who attends the conference, and synthesizing portrait videos of all the users who attend the conference except the current user who attends the conference and the conference hall video collected by the pre-set user who attends the conference in a main conference hall so as to form a virtual video to be displayed for the current user who attends the conference; or
determining the current user who attends the conference, and synthesizing portrait videos of all the users who attend the conference except the current user who attends the conference and a conference hall video collected by the current user who attends the conference so as to form a virtual video to be displayed for the current user who attends the conference,
wherein the current user who attends the conference may be any user who attends the conference in any conference hall, and the pre-set user who attends the conference in the main conference hall is a user who attends the conference in a central position of the main conference hall.

Embodiments of the present disclosure further provide a video conference realization device, comprising an acquiring module, a synthesizing module and a sending module, wherein:
the acquiring module is configured to acquire a conference hall video collected by each user who attends a conference in each conference hall and a portrait video of each user who attends the conference in each conference hall;
the synthesizing module is configured to synthesize, according to a pre-set synthesis scheme, the portrait video of each user who attends the conference in each conference hall and a conference hall video collected by a pre-set user who attends the conference so as to form a virtual video to be displayed; and
the sending module is configured to send virtual videos respectively to a displaying means of each user who attends the conference.

In an exemplary embodiment, the acquiring module is configured to acquire a video of the conference hall within a viewing scope of each user who attends the conference in each conference hall in real time and acquire a video of a full-face portrait of each user who attends the conference in real time through a conference hall control terminal in each conference hall.

In an exemplary embodiment, the acquiring module is further configured to:
acquire the video of the conference hall within the viewing scope of the user who attends the conference shot by a first shooting means worn by each user who attends the conference in each conference hall in real time; and
acquire the video of the full-face portrait of each user who attends the conference shot by a second shooting means in each conference hall in real time.

In an exemplary embodiment, the device further includes a pre-processing module, which is configured to, before synthesizing the portrait video of each user who attends the conference in each conference hall and the conference hall video collected by the pre-set user who attends the conference,
perform a processing of non-destructively removing an image of the second shooting means from the conference hall video collected by each user who attends the conference in each conference hall; or
perform a processing of non-destructively removing images of the first shooting means and the displaying means from the portrait video of each user who attends the conference in each conference hall.

In an exemplary embodiment, the synthesizing module is configured to:
determine a current user who attends the conference, and synthesize portrait videos of all the users who attend the conference except the current user who attends the conference and the conference hall video collected by the pre-set user who attends the conference in a main conference hall so as to form a virtual video to be displayed for the current user who attends the conference; or
determine the current user who attends the conference, and synthesize portrait videos of all the users who attend the conference except the current user who attends the conference and a conference hall video collected by the current user who attends the conference so as to form a virtual video to be displayed for the current user who attends the conference,
wherein the current user who attends the conference may be any user who attends the conference in any conference hall, and the pre-set user who attends the conference in the main conference hall is a user who attends the conference in a central position of the main conference hall.

Embodiments of the present disclosure further provide a video conference realization system, including a conference hall control terminal, a server, more than one first shooting means, at least one second shooting means and more than one displaying means, wherein:
the first shooting means is used for acquiring a conference hall video collected by each user who attends a conference in each conference hall;
the second shooting means is used for acquiring a portrait video of each user who attends the conference in each conference hall;
the conference hall control terminal is used for acquiring the conference hall video shot by each first shooting means and the portrait video of the user who attends the conference shot by each second shooting means, sending the conference hall video and the portrait video of the user who attends the conference which are acquired to the server, and sending a virtual video received from the server to the displaying means;
the server is used for receiving the conference hall video and the portrait video of the user who attends the conference sent by the conference hall control terminal, synthesizing according to a pre-set synthesis scheme the portrait video of each user who attends the conference in each conference hall and a conference hall video collected by a pre-set user who attends the conference so as to form a virtual video to be displayed, and sending the virtual video to the conference hall control terminal; and
the displaying means is used for receiving the virtual video sent by the conference hall control terminal and displaying the virtual video for the user who attends the conference.

In an exemplary embodiment, the server is any video conference realization device described above.

Embodiments of the present disclosure further provide a computer storage medium, wherein an executable program is stored therein, and the executable program, when executed by a processor, implements steps of any video conference realization method described above.

By the video conference realization method, the video conference realization device, the video conference realization system and the computer storage medium provided in embodiments of the present disclosure, a conference hall video collected by each user who attends a conference in each conference hall and a portrait video of each user who attends the conference in each conference hall are acquired; the portrait video of each user who attends the conference in each conference hall and a conference hall video collected by a pre-set user who attends the conference are synthesized according to a pre-set synthesis scheme so as to form a virtual video to be displayed; and virtual videos are respectively sent to a displaying means of each user who attends the conference. As can be seen, in the video conference realization method in the embodiments of the present disclosure, the conference hall video of each conference hall and the portrait video of each user who attends the conference are acquired respectively and synthesized as a virtual video for displaying, and the video conference system based on the AR technology can be used among multiple conference halls, which increases a sense of interaction and participation of the user who attends the conference and enhances the effect of a conference involving different locations.

After reading and understanding the accompanying drawings and the detailed description, other aspects can be understood.

### Brief Description of the Drawings

Fig. 1 is a schematic diagram of a flow of a video conference realization method in embodiment one of the present disclosure;
Fig. 2 is a schematic diagram of structural components of a video conference realization device in embodiment two of the present disclosure;
Fig. 3 is a schematic diagram of structural components of a video conference realization system in embodiment three of the present disclosure;
Fig. 4 is a schematic diagram of a network of a video conference system based on AR technology in embodiment five of the present disclosure;
Fig. 5 is a schematic diagram of a structure of a control system in the video conference system based on the AR technology in embodiment five of the present disclosure;
Fig. 6 is a schematic diagram of a deployment of a conference hall in the video conference system based on the AR technology in embodiment five of the present disclosure;
Fig. 7 is a schematic diagram of an architecture of the video conference system based on the AR technology in embodiment five of the present disclosure; and
Fig. 8 is a schematic diagram of a realization flow of the video conference system based on the AR technology in embodiment five of the present disclosure.

### Detailed Description of the Embodiments

In order to understand features and technical contents of the present disclosure in a more detailed way, implementation of the present disclosure will be elaborated below with reference to the accompanying drawings. The drawings are used only for illustration, not for limiting the present disclosure.

### Embodiment One

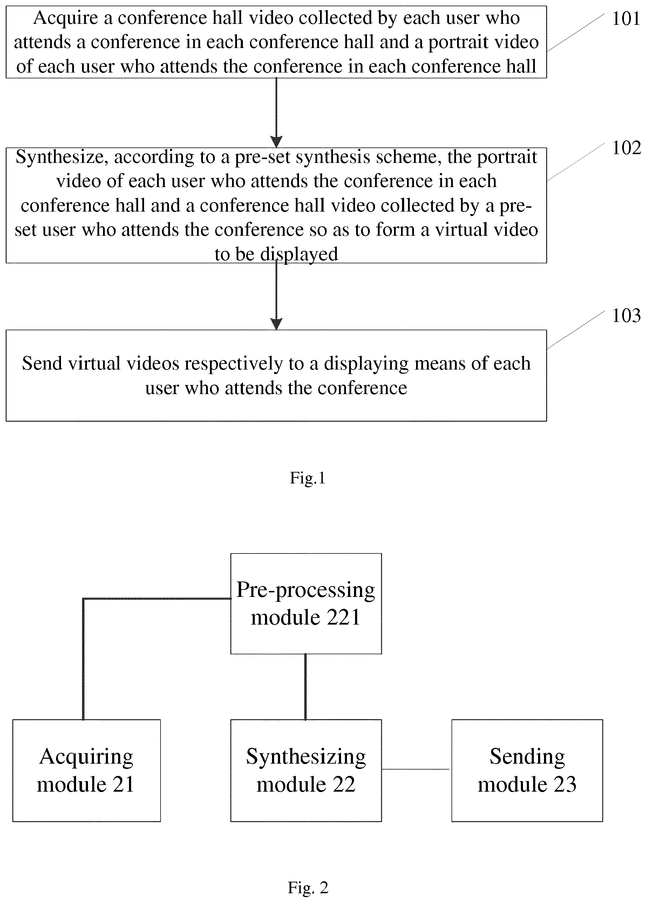

Fig. 1 is a schematic diagram of a flow of a video conference realization method in embodiment one of the present disclosure. As shown in Fig. 1, the method includes the following steps.

At step 101, a conference hall video collected by each user who attends a conference in each conference hall and a portrait video of each user who attends the conference in each conference hall are acquired.

Here, the conference hall video refers to a video of the entire space of the conference hall within a viewing scope of the user who attends the conference collected by the user who attends the conference.

The portrait video only refers to a video of a portrait of a certain user who attends the conference, and does not include a video that reflects other objects in the space around the user who attends the conference or a background.

For example, before a server acquires the conference hall video collected by each user who attends the conference in each conference hall and the portrait video of each user who attends the conference in each conference hall, a following step is included.

A communication link is established between the server and a terminal in each conference hall; and after a conference instruction of a conference hall control terminal is received, video and audio transmission channels are opened.

In this way, acquiring the conference hall video collected by each user who attends the conference in each conference hall and the portrait video of each user who attends the conference in each conference hall in real time can be facilitated.

Acquiring the conference hall video collected by each user who attends the conference in each conference hall and the portrait video of each user who attends the conference in each conference hall includes a following step.

By the conference hall control terminal in each conference hall, a video of the conference hall within the viewing scope of each user who attends the conference is acquired in real time, and a video of a full-face portrait of each user who attends the conference is acquired in real time.

For example, the video of the conference hall within the viewing scope of the user who attends the conference shot by a first shooting means worn by each user who attends the conference in each conference hall is acquired in real time.

The video of the full-face portrait of each user who attends the conference in each conference hall shot by a second shooting means in each conference hall is acquired in real time.

The first shooting means may be worn on the head of each user who attends the conference, and the second shooting means may be positioned opposite the user who attends the conference with a camera oriented toward a full face of the user who attends the conference. Generally, one first shooting means is provided for one user who attends the conference, while only one second shooting means is provided. Of course, if orientations of users who attend the conference are not consistent, multiple shooting means may be positioned so as to ensure that the video of the full-face portrait of each user who attends the conference in each conference hall may be shot.

In this way, when each user who attends the conference watches a virtual video obtained by synthesizing videos shot by the first shooting means and the second shooting means, he/she is more likely to have an immersive feeling.

In actual application, apparatuses positioned in each conference hall include: a conference hall control terminal, more than one first shooting means, at least one second shooting means and more than one displaying means.

The conference hall control terminal is used for acquiring videos shot by each first shooting means and each second shooting means in real time. The video shot by the first shooting means is a conference hall video, and the video shot by the second shooting means is a portrait video. Then, the conference hall control terminals ends the conference hall video and the portrait video to the server. The conference hall control terminal may be an ordinary computer which may run an operation system such as Linux, Windows and so on; and in the case where speed of a wireless network is sufficient, the conference hall control terminal may also be a mobile terminal such as a mobile phone. Specific limitation will not be made.

The first shooting means and the displaying means may be integrated into a same pair of glasses to be worn on the head of each user who attends the conference. The first shooting means is arranged at an external surface of the pair of glasses which faces away from the user who attends the conference, and the displaying means is arranged at an internal surface of the pair of glasses which faces the user who attends the conference. In this way, the conference hall video shot by the first shooting means is the video of the entire space of the conference hall within the viewing scope of the user who attends the conference, and the displaying means may display a video in front of eyes of the user who attends the conference.

The second shooting means may be a 3D body scanner, which may acquire a three-dimensional video of the portrait of each user who attends the conference. The three-dimensional video of the portrait of each user who attends the conference is independent and is separate from other objects in the entire conference hall and the background. In this way, it is convenient for synthesizing the portrait video of each user who attends the conference to a conference hall video of any conference hall.

In actual use, the first shooting means and the displaying means integrated on the same pair of glasses may be combined in two ways.

In a first way of combination, the first shooting means is a three-dimensional shooting means. By using a corresponding pair of glasses, a video shot may be displayed as a three-dimensional video. For example, a chromatic aberration or polarization imaging technology is used. Two cameras are needed for shooting a same scene, and then videos shot by the two cameras are superimposed. The displaying means is an ordinary pair of video glasses added with the chromatic aberration or polarization technology. After wearing the pair of video glasses, each user who attends the conference may see a three-dimensional virtual video without a special processing by the pair of video glasses. Moreover, since a large screen may be virtualized by the pair of video glasses, each user who attends the conference may have an immersive feeling.

In a second way of combination, the first shooting means is an ordinary shooting means, and the displaying means is a pair of virtual reality (VR) glasses. After each user who attends the conference wears the pair of VR glasses, the pair of VR glasses further virtualizes a three-dimensional video from an ordinary video while virtualizing a very large screen, so that each user who attends the conference has an immersive feeling.

In actual use, the second way of combination is usually chosen. In this way, the shooting means is simpler, and it is much easier to synthesize the portrait video of each user who attends the conference and the conference hall video.

At step 102, according to a pre-set synthesis scheme, the portrait video of each user who attends the conference in each conference hall and the conference hall video collected by a pre-set user who attends the conference are synthesized, so as to form a virtual video to be displayed.

Here, the virtual video is synthesized for each user who attends the conference. The number of the users who attend the conference is consistent with the number of virtual videos to be synthesized. The virtual videos to be seen by respective users who attend the conference are different, because it is required that the virtual video to be seen include all users who attend the conference with his/her own portrait video excluded.

In an embodiment of the present disclosure, the pre-set synthesis scheme mainly includes two types.

In a first type, a current user who attends the conference is determined first, and then portrait videos of all the users who attend the conference except the current user who attends the conference and the conference hall video collected by the pre-set user who attends the conference in a main conference hall are synthesized, so as to form a virtual video to be displayed for the current user who attends the conference. For example, in a video conference, there is a main conference hall, and other conference halls are branch conference halls. In this case, it is needed to add all the users who attend the conference to the conference hall where the main conference hall is located. The determined current user who attends the conference may be any user who attends the conference in any conference hall. The pre-set user who attends the conference in the main conference hall may either be a user who attends the conference in a center position of the main conference hall or be a user who attends the conference selected randomly.

In a second type, the current user who attends the conference is determined first, and then portrait videos of all the users who attend the conference except the current user who attends the conference and a conference hall video collected by the current user who attends the conference are synthesized, so as to form a virtual video to be displayed for the current user who attends the conference. The determined current user who attends the conference may be any user who attends the conference in any conference hall.

In order that a space of the conference hall in the virtual video may accommodate all the users who attend the conference, a space of a pre-set conference hall in the virtual video may be expanded. For example, a conference table and the space of the conference hall may be expanded.

An arrangement of users who attend the conference in a same conference hall may be discussed according to the number of the users who attend the conference.
(1) In a case of a small number of people, for example, a case where the total number of people is smaller than 10, the conference table is rectangular, and the user who attends the conference and watches the virtual video sits in the middle of one side, users who attend the conference in other conference halls sitting at the other side.
(2) In a case of a relatively large number of people, for example, a case where the total number of people is from 10 to 30, the conference table is square or circular, and all the users who attend the conference are arranged at four sides of the conference table or around the conference table, the user who attends the conference and watches the virtual video sits in a central position.
(3) In a case of a very large number of people, for example, a case where the total number of people is from 30 to 100, the conference table is removed, and all the users who attend the conference are arranged at multiple rows in a step-like manner, similar to seats in a lecture hall, the user who attends the conference and watches the virtual video siting at a position similar to a platform.

In a case where the number of people is more than that in the third case, people may be divided into groups, and virtual videos may be synthesized separately. Details will not be provided herein.

Before synthesizing the portrait video of each user who attends the conference in each conference hall and the conference hall video collected by the pre-set user who attends the conference so as to form a virtual video to be displayed, the method further includes:
performing a processing of non-destructively removing an image of the second shooting means from the conference hall video collected by each user who attends the conference in each conference hall; and/or
performing a processing of non-destructively removing images of the first shooting means and the displaying means from the portrait video of each user who attends the conference in each conference hall.

In order to facilitate non-destructively removing the image of the first shooting means or the displaying means from the portrait video of each user who attends the conference, the first shooting means and the displaying means are integrated on one pair of glasses. In addition, the pair of glasses is further configured to be transparent. In this way, the second shooting means may shoot the entire facial expression of the user who attends the conference.

For example, a dimension, a size, and a color of the pair of glasses on which the first shooting means and the displaying means are integrated are all pre-set, and pairs of glasses of different users who attend the conference are identical. Thus, a corresponding processing application may be set in a video processing module of the server, the processing principle of which is similar to some existing retouching applications. The conference hall video is processed automatically after being obtained.

Likewise, the second shooting means may also perform a similar processing.

At step 103, virtual videos are respectively sent to a displaying means of each user who attends the conference.

For example, the virtual videos are respectively sent to the displaying means worn by each user who attends the conference on the head for displaying.

Virtual videos seen by respective users who attend the conference are different. That is, the virtual video seen by each user who attends the conference includes all the users who attend the conference except himself/herself. Because of this, in order to avoid confusion, each user who attends the conference should be numbered, and a synthesized virtual video should also be marked a number which is consistent with a number of the user who attends the conference. In this way, it is convenient for sending a right virtual video to each user who attends the conference.

A specific method of numbering may be either giving one number sticker which may be identified by the second shooting means to each user who attends the conference or automatically numbering after face recognition is performed by the second shooting means.

In actual use, the method of numbering may be marking on a surface of the first shooting means. This is because the first shooting means and the displaying means are integrated, and the second shooting means may identify the number of the user who attends the conference immediately when shooting, so that a virtual video of a corresponding number may be sent to a corresponding displaying means when the virtual video is sent.

In this way, even if users who attend the conference exchange the first shooting means, it does not affect viewing the virtual video by the users who attend the conference.

### Embodiment Two

Fig. 2 is a schematic diagram of structural components of a video conference realization device in embodiment two of the present disclosure. As shown in Fig.2, the device includes an acquiring module 21, a synthesizing module 22 and a sending module 23.

The acquiring module 21 is configured to acquire a conference hall video collected by each user who attends a conference in each conference hall and a portrait video of each user who attends the conference in each conference hall.

The synthesizing module 22 is configured to synthesize, according to a pre-set synthesis scheme, the portrait video of each user who attends the conference in each conference hall and the conference hall video collected by a pre-set user who attends the conference, so as to form a virtual video to be displayed.

The sending module 23 is configured to sending virtual videos respectively to a displaying means of each user who attends the conference.

For a clearer explanation, respective modules will be described in detail below.

The acquiring module 21 is configured to acquire a conference hall video collected by each user who attends a conference in each conference hall and a portrait video of each user who attends the conference in each conference hall.

The acquiring module 21 is specifically configured to:
acquire, by a conference hall control terminal in each conference hall, a video of a conference hall within the viewing scope of each user who attends the conference in real time and a video of a full-face portrait of each user who attends the conference in real time.

For example, the acquiring module 21 is further configured to:
acquire the video of the conference hall within the viewing scope of the user who attends the conference shot by a first shooting means worn by each user who attends the conference in each conference hall in real time; and
acquire the video of the full-face portrait of each user who attends the conference in each conference hall shot by a second shooting means in each conference hall in real time.

The first shooting means may be worn on the head of each user who attends the conference, and the second shooting means may be positioned opposite the user who attends the conference with a camera oriented toward a full face of the user who attends the conference. If orientations of users who attend the conference are not consistent, multiple shooting means may be positioned.

In this way, when each user who attends the conference watches a virtual video obtained by synthesizing videos shot by the first shooting means and the second shooting means, he/she is more likely to have an immersive feeling.

For example, terminals in each conference hall include a conference hall control terminal, a first shooting means, a second shooting means and a displaying means. The conference hall control terminal is used for collecting videos shot by the first shooting means and the second shooting means in real time and sending the videos to a server. The conference hall control terminal may be an ordinary computer which may run an operation system such as Linux, Windows and so on; and in the case where speed of a wireless network is sufficient, the conference hall control terminal may also be a mobile terminal such as a mobile phone. Specific limitation will not be made.

The first shooting means and the displaying means may be integrated into a same pair of glasses to be worn on the head of each user who attends the conference. The first shooting means is arranged at an external surface of the pair of glasses which faces away from the user who attends the conference, and the displaying means is arranged at an internal surface of the pair of glasses which faces the user who attends the conference. In this way, the conference hall video shot by the first shooting means is the video of the entire space of the conference hall within the viewing scope of the user who attends the conference, and the displaying means may display a video in front of eyes of the user who attends the conference.

The second shooting means may be a 3D body scanner, which may acquire a three-dimensional video of the portrait of each user who attends the conference. The three-dimensional video of the portrait of each user who attends the conference is independent and is separate from other objects in the entire conference hall and a background. In this way, it is convenient for synthesizing the portrait video of each user who attends the conference to a conference hall video of any conference hall.

In actual use, the first shooting means and the displaying means integrated on the same pair of glasses may be combined in two ways.

In a first way of combination, the first shooting means is a three-dimensional shooting means. By using a corresponding pair of glasses, a video shot may be displayed as a three-dimensional video. For example, a chromatic aberration or polarization imaging technology is used. Two cameras are needed for shooting a same scene, and then videos shot by the two cameras are superimposed. The displaying means is an ordinary pair of video glasses added with the chromatic aberration or polarization technology. After wearing the pair of video glasses, each user who attends the conference may see a three-dimensional virtual video without a special processing by the pair of video glasses. Moreover, since a large screen may be virtualized by the pair of video glasses, each user who attends the conference may have an immersive feeling.

In a second way of combination, the first shooting means is an ordinary shooting means, and the displaying means is a pair of virtual reality (VR) glasses. After each user who attends the conference wears the pair of VR glasses, the pair of VR glasses further virtualizes a three-dimensional video from an ordinary video while virtualizing a very large screen, so that each user who attends the conference has an immersive feeling.

In actual use, the second way of combination is usually chosen. In this way, the shooting means is simpler, and it is much easier to synthesize the portrait video of each user who attends the conference and the conference hall video.

The synthesizing module 22 is configured to synthesize, according to a pre-set synthesis scheme, the portrait video of each user who attends the conference in each conference hall and the conference hall video collected by a pre-set user who attends the conference, so as to form a virtual video to be displayed.

Here, the virtual video is synthesized for each user who attends the conference. The number of the users who attend the conference is consistent with the number of virtual videos to be synthesized. The virtual videos to be seen by respective users who attend the conference are different, because it is required that the virtual video to be seen include all users who attend the conference with his/her own portrait video excluded.

In an embodiment of the present disclosure, the pre-set synthesis scheme mainly includes two types.

In a first type, a current user who attends the conference is determined first, and then portrait videos of all the users who attend the conference except the current user who attends the conference and the conference hall video collected by the pre-set user who attends the conference in a main conference hall are synthesized, so as to form a virtual video to be displayed for the current user who attends the conference. For example, in a video conference, there is a main conference hall, and other conference halls are branch conference halls. In this case, it is needed to add all the users who attend the conference to the conference hall where the main conference hall is located. The determined current user who attends the conference may be any user who attends the conference in any conference hall. The pre-set user who attends the conference in the main conference hall may either be a user who attends the conference in a center position of the main conference hall or be a user who attends the conference selected randomly.

In a second type, the current user who attends the conference is determined first, and then portrait videos of all the users who attend the conference except the current user who attends the conference and a conference hall video collected by the current user who attends the conference are synthesized, so as to form a virtual video to be displayed for the current user who attends the conference. The determined current user who attends the conference may be any user who attends the conference in any conference hall.

In order that a space of the conference hall in the virtual video may accommodate all the users who attend the conference, a space of a pre-set conference hall in the virtual video may be expanded. For example, a conference table and the space of the conference hall may be expanded.

An arrangement of users who attend the conference in a same conference hall may be discussed according to the number of the users who attend the conference.
(1) In a case of a small number of people, for example, a case where the total number of people is smaller than 10, the conference table is rectangular, and the user who attends the conference and watches the virtual video sits in the middle of one side, users who attend the conference in other conference halls sitting at the other side.
(2) In a case of a relatively large number of people, for example, a case where the total number of people is from 10 to 30, the conference table is square or circular, and all the users who attend the conference are arranged at four sides of the conference table or around the conference table, the user who attends the conference and watches the virtual video sits in a central position.
(3) In a case of a very large number of people, for example, a case where the total number of people is from 30 to 100, the conference table is removed, and all the users who attend the conference are arranged at multiple rows in a step-like manner, similar to seats in a lecture hall, the user who attends the conference and watches the virtual video siting at a position similar to a platform.

In a case where the number of people is more than that in the third case, people may be divided into groups, and virtual videos may be synthesized separately. Details will not be provided herein.

The device further includes a pre-processing module 221, and the pre-processing module 221 is configured to:
before the portrait video of each user who attends the conference in each conference hall and the conference hall video collected by the pre-set user who attends the conference are synthesized so as to form a virtual video to be displayed, perform a processing of non-destructively removing an image of the second shooting means from the conference hall video collected by each user who attends the conference in each conference hall; and/or
perform a processing of non-destructively removing images of the first shooting means and the displaying means from the portrait video of each user who attends the conference in each conference hall.

In order to facilitate non-destructively removing the image of the first shooting means or the displaying means from the portrait video of each user who attends the conference, the first shooting means and the displaying means are integrated on one pair of glasses. In addition, the pair of glasses is further configured to be transparent. In this way, the second shooting means may shoot the entire facial expression of the user who attends the conference.

For example, a dimension, a size, and a color of the pair of glasses on which the first shooting means and the displaying means are integrated are all pre-set, and pairs of glasses of different users who attend the conference are identical. Thus, a corresponding processing application may be set in a video processing module of the server, the processing principle of which is similar to some existing retouching applications. The conference hall video is processed automatically after being obtained.

Likewise, the second shooting means may also perform a similar processing.

The sending module 23 is configured to send virtual videos respectively to a displaying means of each user who attends the conference.

For example, the virtual videos are respectively sent to the displaying means worn by each user who attends the conference on the head for displaying. Virtual videos seen by respective users who attend the conference are different. That is, the virtual video seen by the user who attends the conference includes all the users who attend the conference except himself/herself. Because of this, in order to avoid confusion, each user who attends the conference should be numbered, and a synthesized virtual video should also be marked a number which is consistent with a number of the user who attends the conference. In this way, it is convenient for sending a right virtual video to each user who attends the conference.

A specific method of numbering may be either giving one number sticker which may be identified by the second shooting means to each user who attends the conference or automatically numbering after face recognition is performed by the second shooting means.

In actual use, the method of numbering may be marking on a surface of the first shooting means. This is because the first shooting means and the displaying means are integrated, and the second shooting means may identify the number of the user who attends the conference immediately when shooting, so that a virtual video of a corresponding number may be sent to a corresponding displaying means when the virtual video is sent.

In this way, even if users who attend the conference exchange the first shooting means, it does not affect viewing the virtual video by the users who attend the conference.

In the present embodiment, the acquiring module 21, the synthesizing module 22, the pre-processing module 221 and the sending module 23 may all be realized by a central processing unit (CPU), a microprocessor (MPU), a digital signal processor (DSP), or a field programmable gate array (FPGA) located in the server.

### Embodiment Three

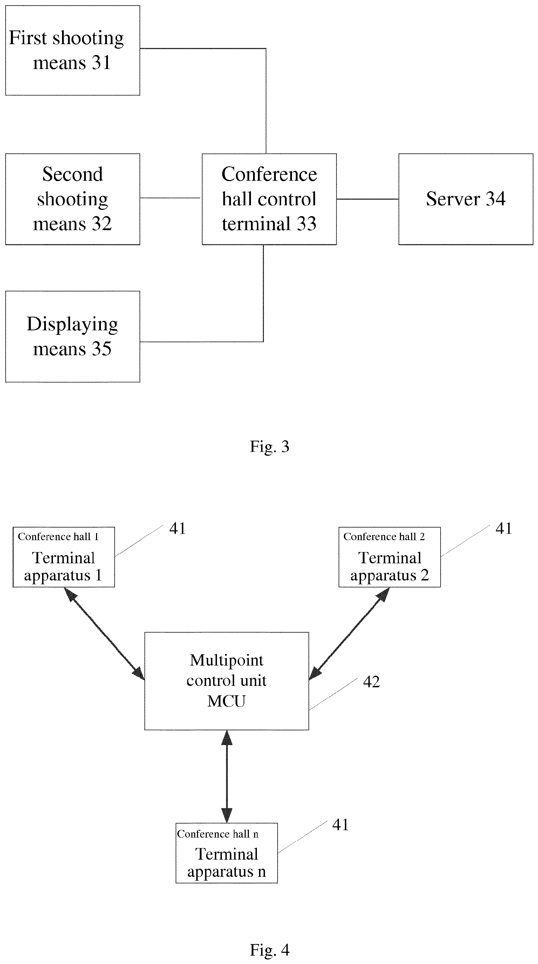

Fig. 3 is a schematic diagram of structural components of a video conference realization system in embodiment three of the present disclosure. As shown in Fig. 3, the video conference realization system includes a conference hall control terminal 33, a server 34, more than one first shooting means 31, at least one second shooting means 32 and more than one displaying means 35.

The first shooting means 31 is used for acquiring a conference hall video collected by each user who attends a conference in each conference hall.

The second shooting means 32 is used for acquiring a portrait video of each user who attends the conference in each conference hall.

The conference hall control terminal 33 is used for acquiring the conference hall video shot by each first shooting means 31 and the portrait video of the user who attends the conference shot by each second shooting means 32, sending the acquired conference hall video and the portrait video of the user who attends the conference to the server 34, and sending a virtual video received from the server 34 to the displaying means.

The server 34 is used for receiving the conference hall video and the portrait video of the user who attends the conference sent by the conference hall control terminal 33, synthesizing according to a pre-set synthesis scheme the portrait video of each user who attends the conference in each conference hall and the conference hall video collected by a pre-set user who attends the conference so as to form a virtual video to be displayed, and sending the virtual video to the conference hall control terminal 33.

The displaying means 35 is used for receiving the virtual video sent by the conference hall control terminal 33 and displaying the virtual video for the user who attends the conference.

Structural components of the server 34, connection relationships among respective components, and functions and principles of respective components are all the same as the description for the video conference realization device in embodiment two. Details will not be repeated.

### Embodiment Four

The present embodiment provides a computer storage medium with an executable program stored therein. The executable program, when executed by a processor, implements the steps of the video conference realization method in embodiment one.

The computer storage medium may be a magnetic memory, an optical memory, or a flash memory. Specific limitation will not be made.

### Embodiment Five

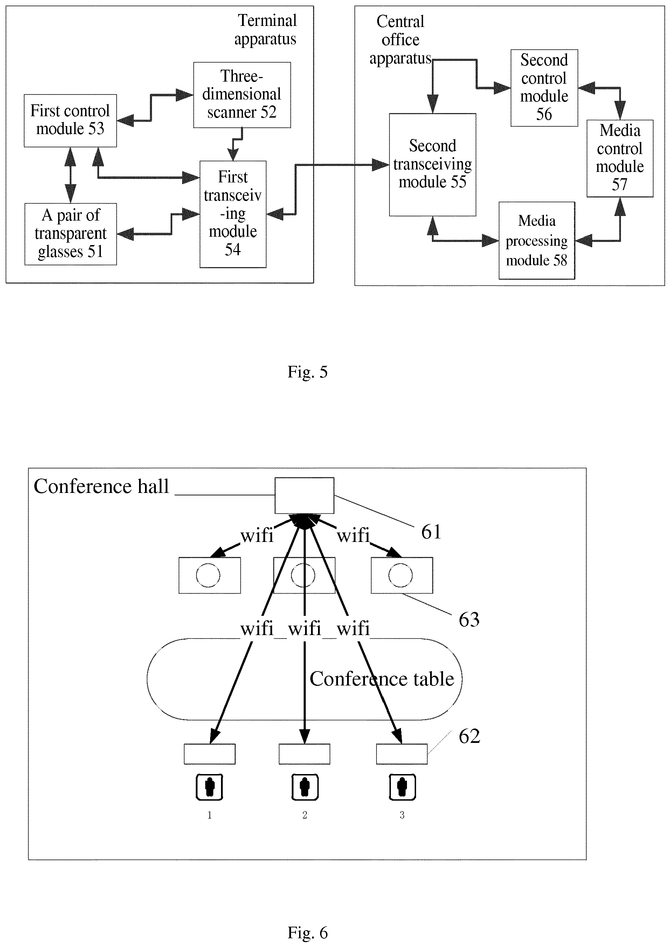

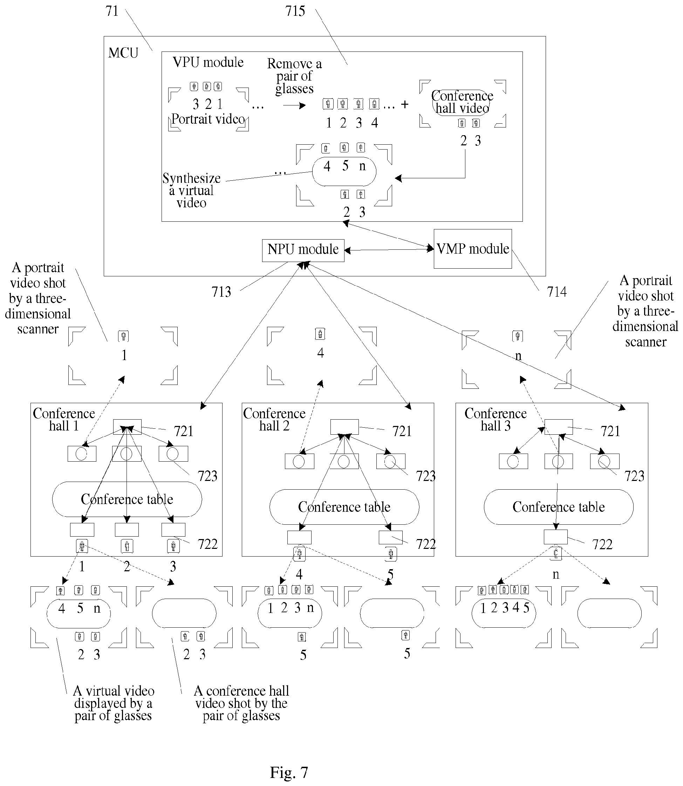

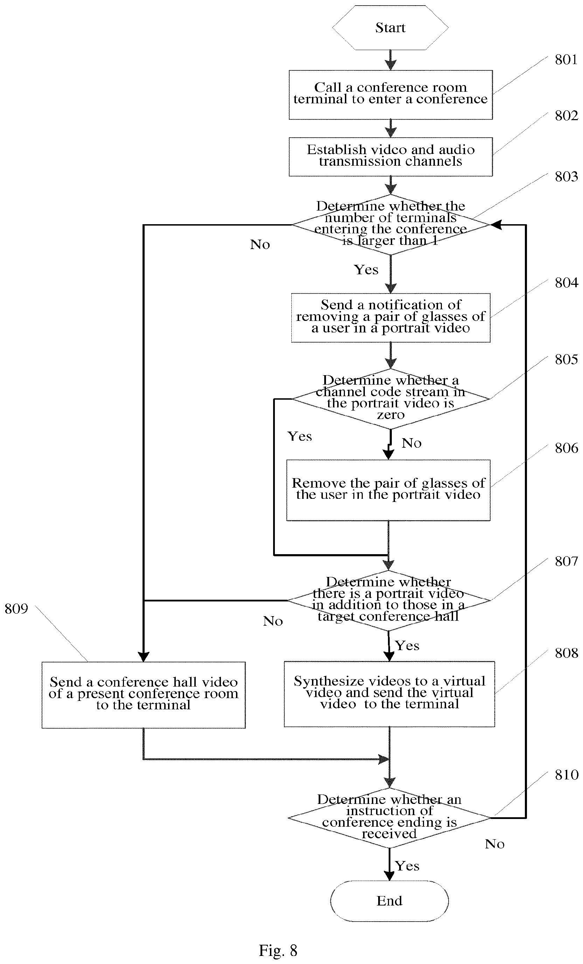

Fig. 4 to Fig. 8 are all schematic diagrams of a video conference system based on AR technology in embodiment five of the present disclosure. Fig. 4 is a schematic diagram of a network of the video conference system based on the AR technology in embodiment five of the present disclosure; Fig. 5 is a schematic diagram of a structure of a control system in the video conference system based on the AR technology in embodiment five of the present disclosure; Fig. 6 is a schematic diagram of a deployment of a conference hall in the video conference system based on the AR technology in embodiment five of the present disclosure; Fig. 7 is a schematic diagram of an architecture of the video conference system based on the AR technology in embodiment five of the present disclosure; and Fig. 8 is a schematic diagram of a realization flow of the video conference system based on the AR technology in embodiment five of the present disclosure.

As shown in Fig. 4, the network of the video conference system based on the AR technology includes an office end apparatus and terminal apparatuses 41 in respective conference halls.

The office end apparatus includes a multipoint control unit (MCU) 42, and the terminal apparatuses 41 in the respective conference halls include terminal apparatus 1 to terminal apparatus N.

The multipoint control unit 42is used for receiving a three-dimensional image from the terminal apparatus 41, so as to realize simultaneous communication with one another for a conference including multiple conference locations, realize mixing and switching of digital signals such as audio and video, and realize management and control of communication with one another for a multipoint video conference. The multipoint control unit 42 is a digital processing unit, which may realize switching and mixing of all digital signals such as audio, video, data and signaling in the numeric field. The multipoint control unit 42 further has a function of effectively controlling a video conference network and a function of effectively managing a video conference system.

Here, the multipoint control unit 42 corresponds to the server 34 in embodiment three.

The terminal apparatuses 41 are deployed in respective conference halls, and one terminal apparatus 41 is deployed in one conference hall. A control module of the terminal apparatus 41 is configured to perform signaling interaction with the server and the shooting means and displaying means in the conference hall. A transceiving module of the terminal apparatus 41 is configured to perform media interaction with the server and the shooting means and displaying means in the conference hall. The terminal apparatus 41 is connected to the shooting means and displaying means in the conference hall via Wi-Fi (wireless fidelity) or a network cable. The terminal apparatus 41 is configured to receive a three-dimensional scene and a three-dimensional portrait collected by the shooting means in the conference hall, transmit the three-dimensional scene and the three-dimensional portrait to the server via a communication line such as the network cable, an optical fiber or a special line, and receive a three-dimensional synthesized image sent from the server.

Here, the terminal apparatus 41 corresponds to the conference hall control terminal 33 in embodiment three.

For example, the office end apparatus is a minicomputer in which a Linux operation system is installed.

The terminal apparatus 41 is a personal computer (PC) in which a Window operation system is installed.

Fig. 5 is a schematic diagram of a structure of a control system in the video conference system based on the AR technology in embodiment five of the present disclosure. As shown in Fig. 5, the control system in the video conference system based on the AR technology includes a terminal apparatus and an office end apparatus.

The terminal apparatus includes a pair of transparent glasses 51, a three-dimensional scanner 52 and a conference hall control terminal.

Here, the pair of transparent glasses 51 corresponds to the first shooting means 31 and the displaying means 35 in embodiment three; the three-dimensional scanner 52 corresponds to the second shooting means 32 in embodiment three; and the conference hall control terminal corresponds to the conference hall control terminal 33 in embodiment three.

The office end apparatus corresponds to the server 34 in embodiment three.

The conference hall control terminal includes a first control module 53 and a first transceiving module 54.

The office end apparatus includes a second transceiving module 55, a second control module 56, a media control module 57and a media processing module 58.

The pair of transparent glasses 51 is used for acquiring a conference hall video of each conference hall.

The three-dimensional scanner 52 is used for acquiring a portrait video of each user who attends a conference.

The first control module 53 is configured to control working of the pair of transparent glasses 51 and the three-dimensional scanner 52, and control that the videos shot by the pair of transparent glasses 51 and the three-dimensional scanner 52are sent to the second transceiving module 55 via the first transceiving module 54.

The first transceiving module 54 is configured to send the videos shot by the pair of transparent glasses 51 and the three-dimensional scanner 52 to the second transceiving module 55, and receive a virtual video sent by the second transceiving module 55.

The second transceiving module 55 is configured to receive the videos shot by the pair of transparent glasses 51 and the three-dimensional scanner 52 sent by the first transceiving module 54.

The second control module 56 is configured to control working of the second transceiving module 55 and the media control module 57.

The media control module 57 is configured to realize calculation and allocation of media processing resources needed in media business processing, so as to enable the media processing module 58 to better work.

The media processing module 58 is configured to process the videos and synthesize different videos.

Fig. 6 is a schematic diagram of a deployment of a conference hall in the video conference system based on the AR technology in embodiment five of the present disclosure. As shown in Fig. 6, the deployment of the conference hall in the video conference system based on the AR technology includes a conference hall control terminal 61, a pair of transparent glasses 62 and a three-dimensional scanner 63.

Here, the conference hall control terminal 61 corresponds to the conference hall control terminal 33 in embodiment three; the pair of transparent glasses 62 corresponds to the first shooting means 31 and the displaying means 35 in embodiment three; and the three-dimensional scanner 63 corresponds to the second shooting means 32 in embodiment three.

It can be seen from Fig. 6 that, the pair of transparent glasses 62 and the three-dimensional scanner 63are respectively arranged at two sides of a conference table, which is a relatively optimized layout, so as to facilitate collecting videos of an angle needed in a video conference.

The pair of transparent glasses 62 is used for shooting a conference hall video, i.e., shooting a conference hall scene within a viewing scope of each user who attends the conference in each conference hall.

The pair of transparent glasses 62 is further used for displaying a virtual video synthesized by the office end apparatus, so as to enable each user who attends the conference to have better conference experience.

The three-dimensional scanner 63is used for shooting a video of a full-face portrait of each user who attends the conference. The video of the portrait is independent and is separate from other objects in the entire conference hall and a background. In this way, it is convenient for synthesizing the video of the portrait of each user who attends the conference to a conference hall video of any conference hall.

The conference hall control terminal 61 is used for controlling working of the pair of transparent glasses 62 and the three-dimensional scanner 63, and controlling that videos shot by the pair of transparent glasses 62 and the three-dimensional scanner 63are sent to the office end apparatus via the conference hall control terminal 61.

The conference hall control terminal 61 is connected to the pair of transparent glasses 62 and the three-dimensional scanner 63 via Wi-Fi signals, and is connected to the office end apparatus via a special line such as a virtual private network (VPN).

Fig. 7 is a schematic diagram of an architecture of the video conference system based on the AR technology in embodiment five of the present disclosure. As shown in Fig. 7, an architecture of the conference hall of the video conference system based on the AR technology includes an office end apparatus and three conference halls.

The office end apparatus is provided thereon with a multipoint control unit 71. The multipoint control unit 71 includes a signaling control module (not shown in Fig. 7), a network processing module 713, a video control module 714 and a video editing module 715. Each of the conference halls includes a conference hall control terminal 721, a pair of glasses 722and a three-dimensional scanner 723.

The multipoint control unit 71 is used for receiving a three-dimensional image from a terminal, so as to realize simultaneous communication with one another for a conference including multiple conference locations, realize mixing and switching of digitals signals such as audio and video, and realize management and control of communication with one another for a multipoint video conference. The multipoint control unit 71 is a digital processing unit, which may realize switching and mixing of all digital signals such as audio, video, data and signaling in the numeric field. The multipoint control unit 71 further has a function of effectively controlling a video conference network and a function of effectively managing a video conference system. The multipoint control unit 71 specifically includes the following functional modules.

The signaling control module (not shown in Fig. 7) is used for information interaction with the terminal. A function of the signaling control module is the same as that of the second control module 56 in Fig. 5. In actual use, the signaling control module is also called a multipoint control application (MCAPP).

The network processing module 713is a transceiving module in the office end apparatus, and is used for transceiving a media code stream in the office end apparatus. A function of the network processing module 713 is the same as that of the second transceiving module 55in Fig. 5. In actual use, the network processing module 713 is also called a network process unit (NPU).

The video control module 714 is used for realizing calculation and allocation of media processing resources needed in media business processing. The video control module 714 is a media control module in the office end apparatus. The video control module 714 performs calculation and allocation of resources at a certain single board or node on a single MCU, which may be understood as microcosmic calculation, management and allocation of the resources. A function of the video control module 714 is the same as that of the media control module 57 in Fig. 5. In actual use, the video control module 714 is also called a video conference media processer (VMP).

The video editing module 715is a media control module in the office end apparatus. The video editing module 715 is used for removing a pair of transparent glasses 722 in a three-dimensional portrait and synthesizing the three-dimensional portrait with a three-dimensional scene. A function of the video editing module 715 is the same as that of the media processing module 58 in Fig. 5. In actual use, the video editing module 715 is also called a video process unit (VPU).

The conference hall control terminal 721 is used for controlling working of the pair of transparent glasses 722andthethree-dimensional scanner 723, and controlling that videos shot by the pair of transparent glasses 722 and the three-dimensional scanner 723are sent to the network processing module 713 of the office end apparatus via the conference hall control terminal 721.

The pair of transparent glasses 722 is used for shooting a conference hall video, i.e., shooting a conference hall scene with a viewing scope of each user who attends the conference.

The pair of transparent glasses 722 is further used for displaying a virtual video synthesized by the office end apparatus, so as to enable each user who attends the conference to have better conference experience.

The three-dimensional scanner 723 is used for shooting a video of a full-face portrait of each user who attends the conference. The video of the portrait is independent and is separate from other objects in the entire conference hall and a background. In this way, it is convenient for synthesizing the video of the portrait of each user who attends the conference to a conference hall video of any conference hall.

The videos shot by the pair of transparent glasses 722 and the three-dimensional scanner 723 are sent to the office end apparatus via the conference hall control terminal 721 for processing.

In order to better understand a synthesis situation of the conference hall video and the video of the portrait, further explanations will be made below with reference to Fig. 7.

As shown in Fig. 7, three conference halls are shown, i.e., conference hall 1, conference hall 2 and conference hall n. There are three users who attend the conference in the conference hall 1, i.e., user 1 who attends the conference, user 2 who attends the conference and user 3 who attends the conference. There are two users who attend the conference in the conference hall 2, i.e., user 4 who attends the conference and user 5 who attends the conference. There is one user who attends the conference in the conference hall n, i.e., user n who attends the conference.

Circumstances of the virtual video seen by each user who attends the conference will be described specifically below.

In a conference hall video shot by a pair of transparent glasses 722 worn by the user 1 who attends the conference in the conference hall 1, there is no user who attends the conference at an opposite side of a conference table, and there are two users who attend the conference on the right, i.e., the user 2 who attends the conference and the user 3 who attends the conference. In a virtual video synthesized by the office end apparatus, there are three users who attend the conference in the opposite side of the conference table, i.e., the user 4 who attends the conference and the user 5 who attends the conference in the conference hall 2, and the user n who attends the conference in the conference hall n, but the user 1 who attends the conference himself/herself is not included therein. In this way, when the user 1 who attends the conference watches the virtual video, he/she feels like that he/she is attending the conference with the user 2 who attends the conference, the user 3 who attends the conference, the user 4 who attends the conference, the user 5 who attends the conference and the user n who attends the conference in the conference hall 1 where he/she is located.

In a conference hall video shot by a pair of transparent glasses 722 worn by the user 4 who attends the conference in the conference hall 2, there is no user who attends the conference at an opposite side of a conference table, and there is one user who attends the conference on the right, i.e., the user 5 who attends the conference. In a virtual video synthesized by the office end apparatus, there are four users who attend the conference in the opposite side of the conference table, i.e., the user 1 who attends the conference, the user 2 who attends the conference and the user 3 who attends the conference in the conference hall 1, and the user n who attends the conference in the conference hall n, but the user 4 who attends the conference himself/herself is not included therein. In this way, when the user 4 who attends the conference watches the virtual video, he/she feels like that he/she is attending the conference with the user 1 who attends the conference, the user 2 who attends the conference, the user 3 who attends the conference, the user 5 who attends the conference and the user n who attends the conference in the conference hall 2 where he/she is located.

In a conference hall video shot by a pair of transparent glasses 722 worn by the user n who attends the conference in the conference hall n, there is no user who attends the conference at an opposite side of a conference table, and there is no user who attends the conference by the side of the user n who attends the conference. In a virtual video synthesized by the office end apparatus, there are five users who attend the conference in the opposite side of the conference table, i.e., the user 1 who attends the conference, the user 2 who attends the conference and the user 3 who attends the conference in the conference hall 1, and the user 4who attends the conference and the user 5who attends the conference in the conference hall 2, but the user n who attends the conference himself/herself is not included therein. In this way, when the user n who attends the conference watches the virtual video, he/she feels like that he/she is attending the conference with the user 1 who attends the conference, the user 2 who attends the conference, the user 3 who attends the conference, the user 4 who attends the conference and the user 5 who attends the conference in the conference hall n where he/she is located.

Fig. 8 is a schematic diagram of a realization flow of the video conference system based on the AR technology in embodiment five of the present disclosure. As shown in Fig. 8, the realization flow includes the following steps.

At step 801, a conference hall terminal is called to enter a conference.

That is, a communication link is established between a server and a terminal in each conference hall.

For example, a multipoint control unit in the server calls the terminal to enter the conference. The terminal of the conference hall may include a conference control terminal, a first shooting means, a three-dimensional scanner and a displaying means.

At step 802, video and audio transmission channels are established.

The server performs information interaction with the terminal, and opens the video and audio transmission channels. The server opens one video channel for each of the first shooting means and the three-dimensional scanner and opens one audio channel for the entre conference hall. Different channels are differentiated by a combination of an IP address and a port.

For example, information interaction with the terminal is performed by a multipoint control application in the server.

At step 803, it is determined whether the number of terminals entering the conference is larger than 1.

When the number of terminals entering the conference is smaller than or equal to 1, the flow proceeds to step 809.

When the number of terminals entering the conference is larger than 1, the flow proceeds to step 804.

At step 804, a notification of removing a pair of glasses of a user in a portrait video is sent.

For example, a videoconference media processer in the server sends a notification to a video process unit.

If the number of terminals entering the conference is larger than 1, the videoconference media processer sends the notification of removing the pair of glasses of the user in the portrait video to the video process unit.

At step 805, it is determined whether a channel code stream of the portrait video is zero.

For example, the video process unit determines whether the channel code stream of the portrait video sent to the server by each terminal is zero.

When the channel code stream is zero, the flow proceeds to step 807.

When the channel code stream is not zero, the flow proceeds to step 806.

At step 806, the pair of glasses of the user in the portrait video is removed.

For example, the video process unit removes the pair of glasses of the user in the portrait video.

At step 807, it is determined whether there is a portrait video in addition to those ina target conference hall.

That is, the conference hall in which portrait videos of all users who attends the conference are synthesized is the target conference hall, and the target conference hall may vary to each user who attends the conference.

If there is no portrait video in addition to those in the target conference hall, the flow proceeds to step 809.

If there is a portrait video in addition to those in the target conference hall, the flow proceeds to step 808.

At step 808, a virtual video is synthesized and is sent to the terminal.

For example, according to a pre-set synthesis scheme, the portrait video of each user who attends the conference in each conference hall and the conference hall video collected by a pre-set user who attends the conference are synthesized, so as to form a virtual video to be displayed; and the virtual video is sent to each terminal, and the terminal sends the virtual video to a displaying means.

The flow proceeds to step 810.

At step 809, a conference hall video of a present conference hall is sent to the terminal.

In a circumstance where there is no other portrait video, the conference hall video of the present conference hall is sent to the terminal directly.

This step may be performed at the beginning of the conference when terminals in respective conference halls have not started to work yet so as to reduce workload of the server.

At step 810, it is determined whether a conference ending instruction is received.

If no conference ending instruction is received, the flow proceeds to step 803.

If the conference ending instruction is received, the flow ends.

Those ordinary skilled in the art may appreciate that a functional module/unit in all or some steps in the method, the system, and the device disclosed above may be implemented as software, firmware, hardware, and suitable combinations thereof. In a hardware implementation, division of functional modules/units mentioned in the above description does not necessarily correspond to division of physical components. For example, one physical component may have multiple functions, or one function or step may be executed by cooperation of several physical components. Some or all of the components may be implemented as software executed by a processor, such as a digital signal processor or a microprocessor, or as hardware, or as an integrated circuit, such as a special integrated circuit. Such software may be distributed on a computer readable medium. The computer readable medium may include a computer storage medium (or non-transitory medium) and a communication medium (or transitory medium). As is well known to those ordinary skilled in the art, the term computer storage medium includes volatile and nonvolatile, removable and non-removable mediums implemented in any method or technology for storing information (such as a computer readable instruction, a data structure, a program module or other data). The computer storage medium includes, but is not limited to: RAM, ROM, EEPROM, flash memory or other memory technologies; CD-ROM, digital versatile disc (DVD) or other optical disc storage; magnetic cassette, magnetic tape, magnetic disk storage or other magnetic storage devices; or any other medium that may be used to store desired information and may be accessed by the computer. Moreover, it is well known to those skilled in the art that the communication medium typically includes a computer readable instruction, a data structure, a program module, or other data in a modulated data signal, such as a carrier wave or other transport mechanisms, and may include any information delivery medium.

The above description only illustrates exemplary embodiments of the present disclosure, and is not for limiting the protection scope of the present disclosure. Any modification, equivalent replacement, and improvement made within the spirit and principles of the present disclosure should all be included within the protection scope of the present disclosure.

### Industrial Applicability

By the video conference realization method, the video conference realization device, the video conference realization system and the computer storage medium provided in embodiments of the present disclosure, a conference hall video collected by each user who attends a conference in each conference hall and a portrait video of each user who attends the conference in each conference hall are acquired; the portrait video of each user who attends the conference in each conference hall and a conference hall video collected by a pre-set user who attends the conference are synthesized according to a pre-set synthesis scheme so as to form a virtual video to be displayed; and virtual videos are respectively sent to a displaying means of each user who attends the conference. As can be seen, in the video conference realization method in the embodiments of the present disclosure, the conference hall video of each conference hall and the portrait video of each user who attends the conference are acquired respectively and synthesized as a virtual video for displaying, and the video conference system based on the AR technology can be used among multiple conference halls, which increases a sense of interaction and participation of the user who attends the conference and enhances the effect of a conference involving different locations.

## Claims

1. A video conference realization method, comprising:
acquiring a conference hall video collected by each user who attends a conference in each conference hall and a portrait video of each user who attends the conference in each conference hall;
synthesizing, according to a pre-set synthesis scheme, the portrait video of each user who attends the conference in each conference hall and a conference hall video collected by a pre-set user who attends the conference so as to form a virtual video to be displayed; and
sending virtual videos respectively to a displaying means of each user who attends the conference.

2. The method according to claim 1, wherein acquiring the conference hall video collected by each user who attends the conference in each conference hall and the portrait video of the user who attends the conference comprises:
acquiring a video of the conference hall within a viewing scope of each user who attends the conference in each conference hall in real time and acquiring a video of a full-face portrait of each user who attends the conference in real time through a conference hall control terminal in each conference hall.

3. The method according to claim 2, wherein acquiring the video of the conference hall within the viewing scope of each user who attends the conference in each conference hall in real time comprises:
acquiring the video of the conference hall within the viewing scope of the user who attends the conference shot by a first shooting means worn by each user who attends the conference in each conference hall in real time; and
acquiring the video of the full-face portrait of each user who attends the conference in real time comprises:
acquiring the video of the full-face portrait of each user who attends the conference shot by a second shooting means in each conference hall in real time.

4. The method according to claim 3, wherein before synthesizing the portrait video of each user who attends the conference in each conference hall and the conference hall video collected by the pre-set user who attends the conference, the method further comprises:
performing a processing of non-destructively removing an image of the second shooting means from the conference hall video collected by each user who attends the conference in each conference hall; or
performing a processing of non-destructively removing images of the first shooting means and the displaying means from the portrait video of each user who attends the conference in each conference hall; or
performing the processing of non-destructively removing the image of the second shooting means from the conference hall video collected by each user who attends the conference in each conference hall and performing the processing of non-destructively removing the images of the first shooting means and the displaying means from the portrait video of each user who attends the conference in each conference hall.

5. The method according to any of claims 1 to 4, wherein synthesizing, according to the pre-set synthesis scheme, the portrait video of each user who attends the conference in each conference hall and the conference hall video collected by the pre-set user who attends the conference so as to form the virtual video to be displayed comprises:
determining a current user who attends the conference, and synthesizing portrait videos of all the users who attend the conference except the current user who attends the conference and the conference hall video collected by the pre-set user who attends the conference in a main conference hall so as to form a virtual video to be displayed for the current user who attends the conference; or
determining the current user who attends the conference, and synthesizing portrait videos of all the users who attend the conference except the current user who attends the conference and a conference hall video collected by the current user who attends the conference so as to form a virtual video to be displayed for the current user who attends the conference,
wherein the current user who attends the conference may be any user who attends the conference in any conference hall, and the pre-set user who attends the conference in the main conference hall is a user who attends the conference in a central position of the main conference hall.

6. A video conference realization device, comprising an acquiring module, a synthesizing module and a sending module, wherein:
the acquiring module is configured to acquire a conference hall video collected by each user who attends a conference in each conference hall and a portrait video of each user who attends the conference in each conference hall;
the synthesizing module is configured to synthesize, according to a pre-set synthesis scheme, the portrait video of each user who attends the conference in each conference hall and a conference hall video collected by a pre-set user who attends the conference so as to form a virtual video to be displayed; and
the sending module is configured to send virtual videos respectively to a displaying means of each user who attends the conference.

7. The device according to claim 6, wherein the acquiring module is configured to acquire a video of the conference hall within a viewing scope of each user who attends the conference in each conference hall in real time and acquire a video of a full-face portrait of each user who attends the conference in real time through a conference hall control terminal in each conference hall.

8. The device according to claim 7, wherein the acquiring module is further configured to:
acquire the video of the conference hall within the viewing scope of the user who attends the conference shot by a first shooting means worn by each user who attends the conference in each conference hall in real time; and
acquire the video of the full-face portrait of each user who attends the conference shot by a second shooting means in each conference hall in real time.

9. The device according to claim 8, wherein the device further comprises a pre-processing module, which is configured to, before synthesizing the portrait video of each user who attends the conference in each conference hall and the conference hall video collected by the pre-set user who attends the conference,
perform a processing of non-destructively removing an image of the second shooting means from the conference hall video collected by each user who attends the conference in each conference hall; or
perform a processing of non-destructively removing images of the first shooting means and the displaying means from the portrait video of each user who attends the conference in each conference hall; or
perform the processing of non-destructively removing the image of the second shooting means from the conference hall video collected by each user who attends the conference in each conference hall and perform the processing of non-destructively removing the images of the first shooting means and the displaying means from the portrait video of each user who attends the conference in each conference hall.

10. The device according to any of claims 6 to 9, wherein the synthesizing module is configured to:
determine a current user who attends the conference, and synthesize portrait videos of all the users who attend the conference except the current user who attends the conference and the conference hall video collected by the pre-set user who attends the conference in a main conference hall so as to form a virtual video to be displayed for the current user who attends the conference; or
determine the current user who attends the conference, and synthesize portrait videos of all the users who attend the conference except the current user who attends the conference and a conference hall video collected by the current user who attends the conference so as to form a virtual video to be displayed for the current user who attends the conference,
wherein the current user who attends the conference may be any user who attends the conference in any conference hall, and the pre-set user who attends the conference in the main conference hall is a user who attends the conference in a central position of the main conference hall.

11. A video conference realization system, comprising a conference hall control terminal, a server, more than one first shooting means, at least one second shooting means and more than one displaying means, wherein:
the first shooting means is used for acquiring a conference hall video collected by each user who attends a conference in each conference hall;
the second shooting means is used for acquiring a portrait video of each user who attends the conference in each conference hall;
the conference hall control terminal is used for acquiring the conference hall video shot by each first shooting means and the portrait video of the user who attends the conference shot by each second shooting means, sending the conference hall video and the portrait video of the user who attends the conference which are acquired to the server, and sending a virtual video received from the server to the displaying means;
the server is used for receiving the conference hall video and the portrait video of the user who attends the conference sent by the conference hall control terminal, synthesizing according to a pre-set synthesis scheme the portrait video of each user who attends the conference in each conference hall and a conference hall video collected by a pre-set user who attends the conference so as to form a virtual video to be displayed, and sending the virtual video to the conference hall control terminal; and
the displaying means is used for receiving the virtual video sent by the conference hall control terminal and displaying the virtual video for the user who attends the conference.

12. The system according to claim 11, wherein the server is the video conference realization device according to any one of claims 6 to 10.

13. A computer storage medium, wherein an executable program is stored therein, and the executable program, when executed by a processor, implements steps of the video conference realization method according to any one of claims 1 to 5.
